# EUROPÄISCHE PATENTSCHRIFT

(11) **EP 2 438 020 B1**
(45) Veröffentlichungstag und Bekanntmachung des Hinweises auf die Patenterteilung: **14.06.2017**
(21) Anmeldenummer: 10732267.9
(22) Anmeldetag: 27.05.2010
(51) Int. Cl.: C03B 33/03, C03B 33/033, C03B 33/037, C03B 33/09

(54) **VERFAHREN UND VORRICHTUNG ZUR HERSTELLUNG ELASTISCH VERFORMBARER GLASPLATTEN**
METHOD AND APPARATUS FOR PRODUCING AN ELASTICALLY DEFORMABLE GLASS PLATE
PROCÉDÉ ET ÉQUIPEMENT DE FABRICATION DE PANNEAUX DE VERRE DÉFORMABLES ÉLASTIQUEMENT

(30) Priorität: 02.06.2009 DE 102009023602
(43) Veröffentlichungstag der Anmeldung: 11.04.2012
(73) Patentinhaber: Grenzebach Maschinenbau GmbH, 86663 Asbach-Bäumenheim (DE)
(72) Erfinder: RÖLL, Bernhard, 86609 Donauwörth (DE)
(74) Vertreter: Kindermann, Peter
(86) Internationale Anmeldenummer: PCT/DE2010/000586
(87) Internationale Veröffentlichungsnummer: WO 2010/139297

(56) Entgegenhaltungen:
- EP-A1- 1 726 572
- EP-A1- 1 878 707
- EP-A2- 1 270 519
- DE-A1-102004 014 277
- DE-A1-102005 054 669
- JP-A- 7 181 138

## Beschreibung

Die Erfindung betrifft ein Verfahren und eine Vorrichtung zur Herstellung elastisch verformbarer Glasplatten, sowie ein Computerprogramm und einen maschinenlesbaren Träger zur Durchführung des Verfahrens. Solche Glasplatten werden im Allgemeinen in den gewünschten Formaten aus größeren Glasplatten gewonnen.

Zu diesem Zweck werden üblicherweise in einer großen Glasplatte mit einem Schneidrad oder einer Nadel entsprechende Schnitte oder Ritzspuren erzeugt und das Glas wird dann an dieser Sollbruch-Linie mechanisch gebrochen. Der Brechvorgang kann dann von Hand oder mittels einer mechanischen Vorrichtung erfolgen. Der mechanische Brechvorgang ist hierbei schwer kontrollierbar, da das Brechen schlagartig erfolgt. Bei solchen Verfahren kann es deshalb manchmal geschehen, dass der Bruch anders als gewünscht verläuft und das Glas an einer anderen Bruchlinie bricht.

Aus der Druckschrift DE 10 2005 054 669 A1 ist ein Verfahren bekannt, bei welchem das zu schneidende Glas nur an der gewünschten Linie bricht. Die Druckschrift zeigt ein Verfahren zum Brechen von Glas und Keramik, bei dem das Glas mittels Ultraschall an markierter Stelle gebrochen wird. Weiterhin kann nach dieser Druckschrift vorgesehen sein, dass das Glas zum Zweck der gewollten Trennung zuerst an einer bestimmten Linie mit einem Schneidrad geschnitten, mit einer Nadel geritzt oder mit einem Laser geschnitten wurde. Eine Vorrichtung zur Durchführung eines solchen Verfahrens ist dieser Druckschrift nicht zu entnehmen. Weiterhin fehlt hier auch jegliche Anregung zur Konzeption einer Anlage für die großtechnische Bearbeitung der Zuschnitte von Glasplatten.

Ferner ist aus der Druckschrift DE 10 2004 014 277 A1 ein Verfahren zum laserthermischen Trennen von Flachgläsern bekannt, mit dem es möglich sein soll, thermische Anrisse in Glasplatten längs vorgegebener Soll-Linien mit hoher Genauigkeit einzubringen und dabei höhere Schnittgeschwindigkeiten fahren zu können (deutlich größer als 1m/min).Insbesondere sollen auch Gläser mit größerer Dicke in guter Qualität getrennt werden können und auch sehr dicke Gläser (ca. 20 mm) ausreichend tief angeritzt werden. Dies alles soll auch bei Kurvenschnitten erreicht werden.

Hierzu wird in dieser Druckschrift ein Verfahren zum Trennen von Flachgläsern durch thermisches Anritzen mittels eines Laserstrahls beansprucht, der in Gestalt eines Strahlflecks entlang einer Soll-Trennlinie mit einer gewählten Vorschubgeschwindigkeit über die Glasoberfläche bewegt wird. Hierbei wird weiter der so lasererwärmte Linienbereich auf der Glasoberfläche durch eine nachgeführte Kühldüse gekühlt, wobei ferner zuvor im oder kurz vor dem Anfangsbereich der Soll-Trennlinie eine Anfangsverletzung der der Glasoberfläche in Gestalt eines mechanisch oder auf andere Weise erzeugten Anritzpunktes gesetzt wird und wobei nach dem thermischen Anritzen ein Brechen des Glases erfolgt. Bei diesem beschriebenen Verfahren erfolgt das Führen des Laserstrahls entlang der Soll-Trennlinie in Gestalt eines repetierenden vielfachen Überstreichens entlang der Soll - Trennlinie mittels eines schnell gescannten Laserstrahls. Bei einem solchen laserthermischen Trenn-Verfahren an allen Seiten einer Glasplatte werden an den Kanten Mikrorisse vermieden. Eine solche Glasplatte ist deshalb in höherem Maß elastisch verformbar als eine auf normale Art zugeschnittene Glasplatte.

Außer einer, in der dortigen Fig. 4 gezeigten, Prinzipskizze einer Vorrichtung zum Schneiden von Flachgläsern sind der Druckschrift DE 10 2004 014 277 A1 keine Hinweise auf eine konstruktive Ausgestaltung des beschriebenen Verfahrens zu entnehmen, Insbesondere steht in dieser Druckschrift offenbar die wissenschaftliche Erforschung eines solchen Verfahrens im Vordergrund. Der großtechnische Einsatz eines solchen Verfahrens stellt jedoch eine ganz andere Aufgabe dar.

Aus der Druckschrift US 489 908 A ist ein Verfahren und eine Vorrichtung zum automatischen Abtrennen eines sich bewegenden Glasbandes entlang einer angerissenen Linie bekannt, bestehend aus einer auf das Glasband gerichteten Lichtquelle und einer das Glasband abtastenden Fotozelle. Das Trennen von großformatigen Glasplatten mittels Laserstrahlen ist hiermit nicht möglich.

Des Weiteren ist aus der Druckschrift US 6 722 250 B2 ein Verfahren zum fortlaufenden Ablängen von Zuschnitten aus einem kontinuierlich bewegten Endlosmaterial bekannt, bei dem die optische Detektion der Risslinie mittels Beleuchtung durch Rotlicht und die Erfassung mittels einer Kamera angegeben ist. Elastisch verformbare großformatige Glasplatten können mit diesem Verfahren jedoch großtechnisch und ausfallsicher nicht getrennt werden.

Zudem wurden bisher solche Verfahren lediglich zum Schneiden von kleinen Glasflächen wie zum Beispiel von Gläsern zum Schutz der Displays von Handys verwendet.

Die Druckschrift JP 7 181138 A offenbart eine hochgenaue Detektion einer Kerblinie auf einer Glasplatte mittels eines Verfahrens bei dem eine Glasplatte mit einem Projektor beleuchtet wird um mittels einer Kamera ein binär codiertes Bild hiervon zu erhalten.

In der Druckschrift EP 1270 519 A2 ist ein Verfahren zur Ritzspurmarkierung laserinduzierter Ritze von Glaselementen durch optische Sichtbarmachung beschrieben.

Die Druckschrift EP 1 726 572 A1 betrifft ein Verfahren zum mechanischen Brechen von nacheinander in zwei zueinander senkrecht stehenden Trennrichtungen jeweils vorgegebenen Abständen parallel geritzten, flachen Werkstücken aus sprödbrüchigem Material mittels eines Brechwerkzeugs.

Schließlich ist aus der Druckschrift EP 1 878 707 A1 ein Verfahren zur Erzeugung optisch wahrnehmbarer laserinduzierter Risse im spröden Material bekannt, wobei ausgehend von einem Initialriss eine Rissspur in das Material getrieben wird, anschließend ein Markierungsmittel in den Riss eingebracht wird und abschließend das Markierungsmittel von der Oberfläche wieder entfernt wird.

Der Erfindung liegt demgegenüber die Aufgabe zugrunde, eine Vorrichtung und ein Verfahren zum Trennen von elastisch verformbaren großformatigen Glasplatten mittels Laserstrahlen anzugeben, das relativ preiswert, großtechnisch einsetzbar und ausfallsicher ist.

Diese Aufgabe wird hinsichtlich der Vorrichtung durch die Merkmale nach Anspruch 1 und hinsichtlich des Verfahrens durch die Maßnahmen nach Anspruch 7 gelöst.

In den Unteransprüchen sind weiter vorteilhafte Ausführungsbeispiele der Erfindung gekennzeichnet.

Die erfindungsgemäße Vorrichtung wird im Folgenden näher beschrieben.

Es zeigen im Einzelnen:
- Fig.1:: eine perspektivische Darstellung der erfindungsgemäßen Gesamtanlage
- Fig.2:: einen Querschnitt des Portals,
- Fig.3:: eine Detail-Darstellung aus dem Bereich der Anriss-Linie,
- Fig.3a:: eine Einzelheit aus der Fig.3,
- Fig.4:: eine Detail-Darstellung aus dem Bereich des Brechschwerts,
- Fig.5:: eine perspektivische Ansicht der Brech-Einrichtung.

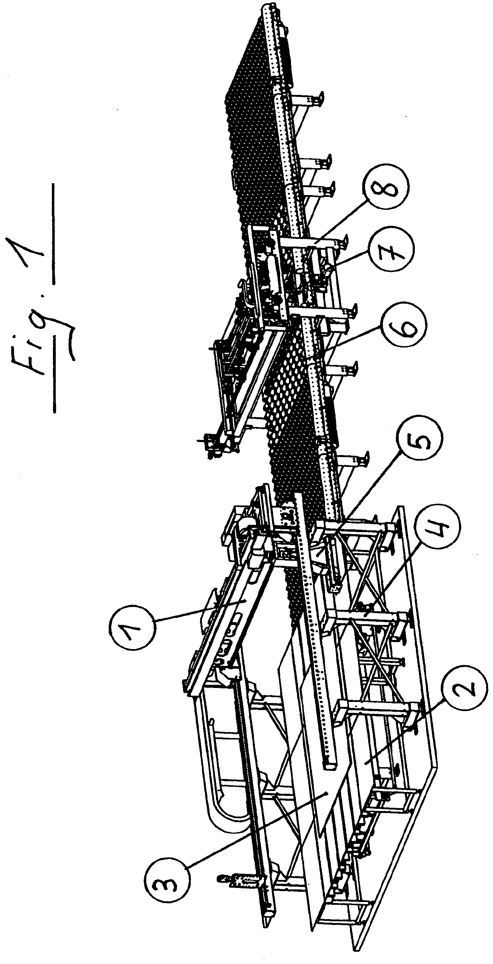

Fig.1 zeigt eine perspektivische Darstellung der Gesamtanlage.
Die hier dargestellte Vorrichtung ist ein Teil einer industriellen Anlage, die das Anreißen und Trennen von großen Glasplatten 3 mit hoher Geschwindigkeit, Genauigkeit und Ausfallsicherheit erlaubt.

Zum Anreißen, bzw. dem Erzeugen einer klar strukturierten Rißfuge wird in dieser Vorrichtung ein Prozess des Erhitzens und Abkühlens der Oberfläche der zu trennenden Glasplatte 3 auf einer vorbestimmten Rißlinie verwendet.
Zum Erhitzen dient hierbei ein Laserstrahl der, fächerförmig verschwenkt, fortschreitend auf einer bestimmten Linie die Oberfläche einer Glasplatte 3 erhitzt, wobei dem Laserstrahl in einem bestimmten Abstand eine Düse zur Aufbringung von Kühlmittel folgt. Der Laserstrahl kann auch wahlweise fortschreitend und repetierend verschwenkt werden.
Die zu bearbeitende Glasplatte 3 wird in der Fig.1 aus der Richtung der linken Seite über einen, an dieser Stelle nicht dargestellten, Rollenförderer 6 oder ein entsprechendes anderes Beförderungsmittel auf den Bearbeitungstisch 2 transportiert.
Den Bearbeitungstisch 2 überspannend erstreckt sich ein Portal 1 zur Aufnahme des Laserarbeitskopfes 5 und der Kühleinrichtung. Dieses Portal 1 ist auf einem frei stehenden Grundrahmen 4 zur Aufnahme der Schneideinheit montiert. In der Fig.1 ist ferner auf der rechten Seite des Portals 1 eine Einheit zur Steuerung des Einsatzortes eines Laserstrahls, der Laserarbeitskopf 5, angebracht.
In der Laufrichtung des Rollenförderers 6 ist im hinteren Teil der Fig. 1 der Grundrahmen 8 für die Brecheinrichtung einer angeritzten Glasplatte 3 dargestellt. Hier ist auch ein Teil des Synchron - Antriebs 7 für das Brechschwert 26 der Brecheinrichtung zuerkennen.

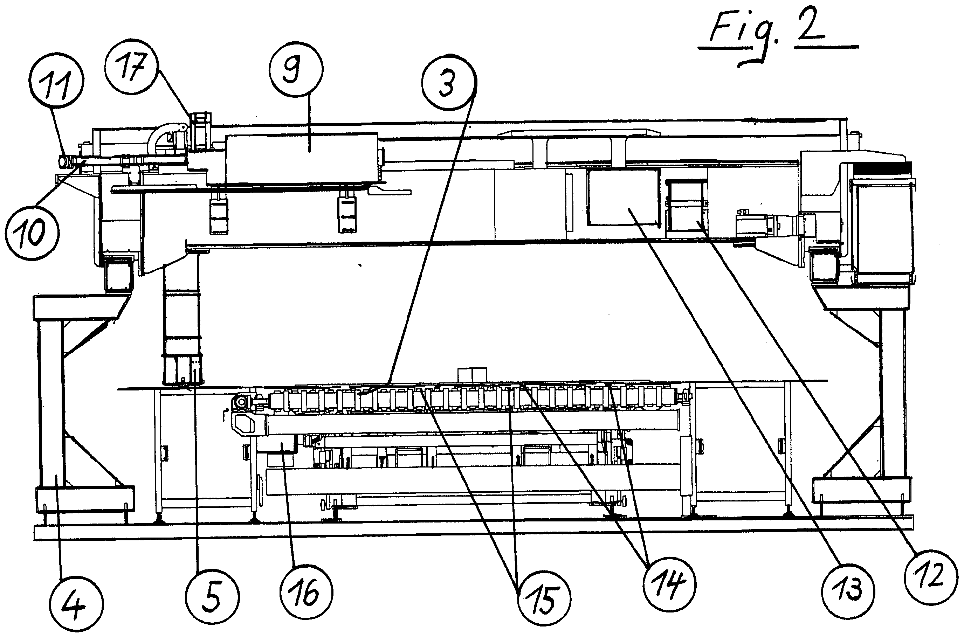

Die Fig.2 zeigt einen Querschnitt des Portals 1.
In dieser Figur ist das Portal 1 zur Aufnahme der Lasereinheit von der Rückseite aus gezeigt. Dies ist unter anderem daran erkennbar, dass der Laserarbeitskopf 5, im Gegensatz zur Darstellung in der Fig.1, auf der linken Seite des Portals 1 in der Randstellung gezeigt ist. Der Grundrahmen 4 der Lasereinheit ist in dieser Sicht beidseitig erkennbar. Die Glasplatte 3 ist im Querschnitt zu sehen. Die Laserstrahl Quelle 9 selbst ist auf der linken Seite des Querstegs des Portals 1 dargestellt. Da der zur Erhitzung der Glasplatte benötigte Laserstrahl entlang einer bestimmten Anriss - Linie verfahren werden muss, muss er nicht nur mehrfach umgelenkt werden, sondern auch einen ortsveränderlichen Laserarbeitskopf 5 aufweisen. Dies geschieht auf den geraden, sich in der Länge nicht veränderlichen, Wegstücken in speziellen Rohren unter Verwendung von Umlenkspiegeln. Das Wegstück, dessen Länge sich bei dem Vorgang des Verfahrens des Laserstrahls über eine Glasplatte 3 verändert, wird aus einem faltbaren Balg gebildet. Diese Wegstrecke stellt die Verbindung zwischen der letzten Rohrverbindung und dem so genannten Polygonrad dar. Ein solches Polygonrad besteht aus einer, um eine Zentralachse drehbaren, polygonartigen Grundstruktur die über eine bestimmte Drehgeschwindigkeit mit Hilfe von verschiedenen Spiegeln eine Auffächerung eines Laserstrahls erlaubt. Solche Polygonräder sind dem Fachmann bekannt. Anstelle eines Polygonrades ist auch mindestens ein einfacher drehbarer Spiegel für diesen Zweck geeignet.
Nach der Darstellung in der Fig.2 wird der von der Laserstrahl - Quelle 9 erzeugte Laserstrahl über eine rohrartige Laserstrahl - Führung 10 und eine anschließende Umlenkeinrichtung 11 in den Laserkopf 5 geführt. Das Zwischenstück zwischen der Umlenkeinrichtung 11 und dem Laserkopf 5 in der Art eines Faltenbalgs sowie ein weiterer Umlenkspiegel sind in der Fig.2 nicht darggestellt. Die gesamte Wegstrecke die der Laserstrahl geführt wird besteht aus einem Raum in dem gegenüber der Umwelt ein leichter Überdruck herrscht. Als vorteilhaft hat sich hier ein Wert von etwa 0,1 bar bis 0,3 bar Überdruck erwiesen. Als Atmosphäre kann Stickstoff oder normale Luft verwendet werden.
Auf der rechten Seite des Querstegs des Portals 1 ist ein Vorratsbehälter 12 für das im Prozess verwendete Kühlmittel zu erkennen. In diesem Bereich befindet sich auch eine Einrichtung 13 zur Aufbereitung des Kühlmittels. Als Kühlmittel hat sich ein kationisches Tensid bewährt. Es kann jedoch auch eine Mischung aus Wasser und Äthanol verwendet werden. Für den Erfolg des Aufbringens des Kühlmittels ist der Luftdruck entscheidend mit dem das Kühlmittel aufgebracht wird. Hier wurde vorteilhaft ein Wert zwischen 5 bis 10 bar ermittelt. Das so aufgebrachte Kühlmittel bewirkt, dass es in den von dem Laser verursachten Anriss hineinkriecht und somit in der Folge die Arbeit des Abbrechens einer Glasplatte 3 unterstützt. Durch die Verwendung einer Lavaldüse kann der Luftstrom beschleunigt werden.
Durch die Anordnung mehrerer in Reihe angeordneter Kühldüsen 19 kann der verursachte Riss in der Glasplatte 3 in die Tiefe getrieben werden.
Im Bereich des Bearbeitungstisches 2 wird eine Glasplatte 3 mittels mehrerer Transportriemen 15 weiter bewegt und in die gewünschte Position gebracht.
Da durch das Einwirken eines Laserstrahls auf eine Glasplatte 3 sich diese auch auf der Unterseite stark erhitzten kann, bzw. diese durchstrahlt, sind zum Schutz der Transportriemen 15 Schutzklappen 14 vorgesehen, die sich vor dem Hochfahren des Bearbeitungstisches 2 unter die Glasplatte 3 schieben und somit die Transportriemen 15 schützen. Ein zu starkes Erhitzen einer Glasplatte 3 kann zum Beispiel durch den Ausfall einer Kühldüse 19 erfolgen. Außerdem können die Transportriemen 15 auch durch die direkte Einstrahlung eines Laserstrahls beschädigt werden. Die Schutzklappen 14 sind bevorzugt aus Aluminium gefertigt. Der Antrieb und die zugehörige Steuerungseinrichtung sind aus Gründen der Übersichtlichkeit nicht dargestellt.
Da die durch die Schutzklappen 14 gebildete Metallschicht andererseits die aufliegende Glasplatte 3 zu stark auskühlen kann und somit den Anriss - Prozess beeinträchtigen kann, kann es vorgesehen sein die Schutzklappen 14 über regelmäßig angeordnete Abstandsmittel von der Glasplatte 3 über eine Luftschicht zu trennen. Ein vergleichbarer Effekt kann auch über Maßnahmen der Beabstandung der Glasplatte 3 mittels Ultraschall erreicht werden.
Durch die Abdeckung der Glasplatte 3 über die darunter angeordneten Schutzklappen wird die Anbringung von Sensoren zur genauen Positionierung erschwert. Entsprechende als Linienlaser ausgebildete Sensoren oder Ultraschall - Sensoren schaffen hier Abhilfe. Diese sind dem Fachmann hinsichtlich ihrer Auswahl und ihres jeweiligen Anwendungsbereichs bekannt.
Der Antrieb der Transportriemen 15 erfolgt mittels des in der Fig.2 gezeigten Antriebs 16. Der Antrieb 17 der Verschiebeeinrichtung des Laserarbeitskopfes 5 ist auf der linken Seite der Querstrebe des Portals 1 in der Fig.2 zu erkennen.
In einer weiteren Ausbaustufe ist die Verwendung eines leistungsfähigeren Lasers vorgesehen. Aus Gewichtsgründen wird dieser nicht am Portal 1 befestigt, sondern stationär im Bereich des Bearbeitungstisches 2. Der Laser strahlt dann von dort aus in die Richtung des Portals 1. Die Umlenkspiegel bedürfen in diesem Fall einer Kühlung.

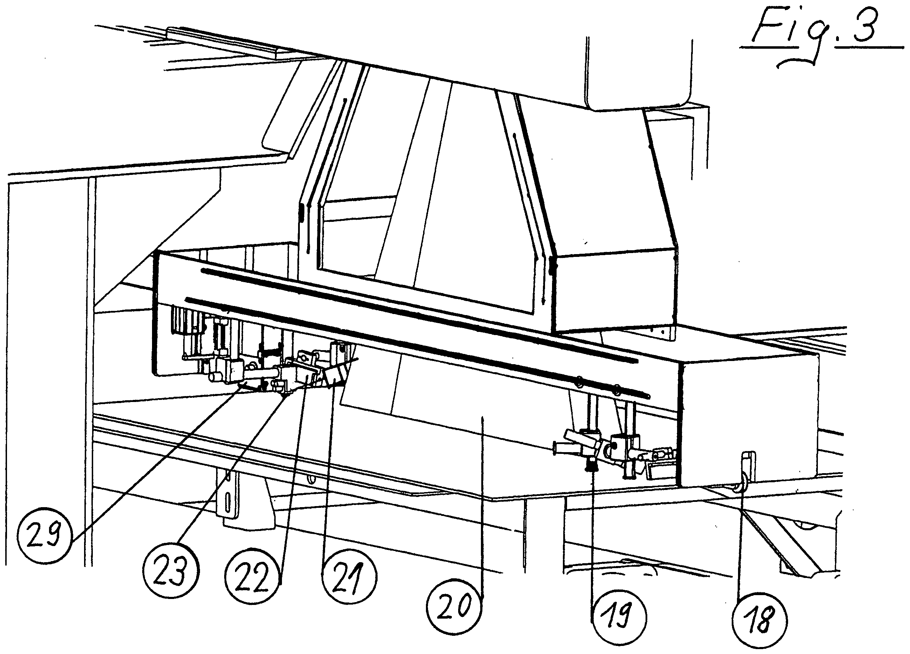

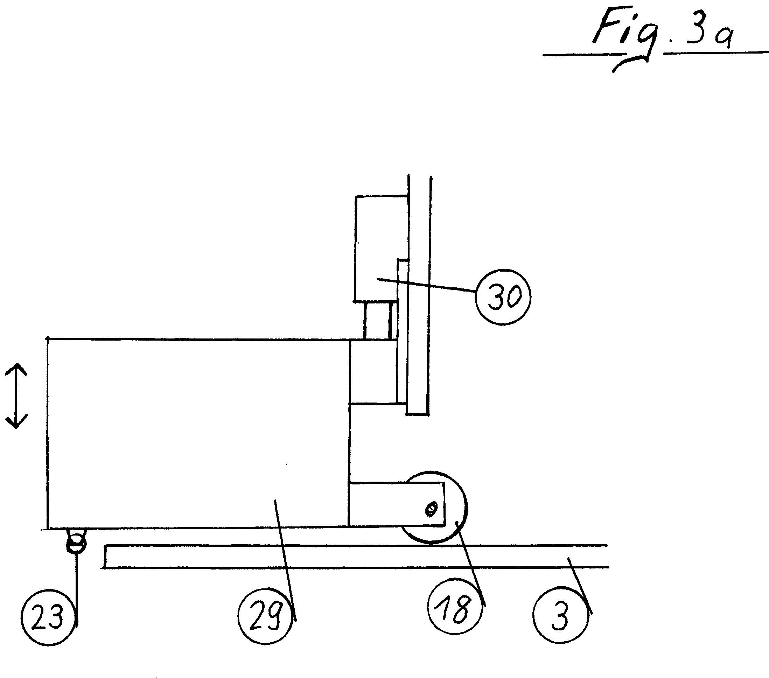

Die Fig.3 zeigt eine Detail - Darstellung aus dem Bereich der Anriss - Linie, insbesondere im Bereich des Laserkopfes 5. Im Mittelpunkt steht hier die im Wesentlichen dreieckige Fläche des Laser - Fächers 20. Benachbart zu dem Laser - Fächer 20 ist auf seiner rechten Seite eine Kühldüse 19 zu erkennen.
Gegenüber, auf der anderen Seite des gezeigten Laser - Fächers, ist eine Kerbeinrichtung 29 dargestellt. In dieser Kerbeinrichtung 29 ist ein kleines Ritz - Rad 23 angedeutet. Diesem benachbart sind eine Lichtquelle 22 und eine zugehörige Kamera 21 zur Detektion des Laser - Anrisses zu erkennen. Das zugehörige Positionier - Rad 18 ist in dieser Darstellung verdeckt.
Die gleiche Anordnung ist auf der gegenüber liegenden Seite angeordnet. Hier ist zwar das Positionier - Rad der zugehörigen Kerbeinrichtung 29 zu erkennen, jedoch ist der Rest der Kerbeinrichtung 29 verdeckt.
Ist die Kerbeinrichtung 29 an die Stelle, an der die Abtrennung der Glasplatte 3 erfolgen soll, verfahren, wird das Positionier - Rad 18 solange auf der Glasplatte 3 in der Richtung des späteren Anrisses geführt bis das Ritz - Rad 23 der Kerbeinrichtung 29 an den Rand der Glasplatte stößt. Das Ritz - Rad 23 schlägt dadurch nicht nur eine Kerbe an der beabsichtigten Stelle in den oberen Rand der Glasplatte 3, sondern wird auch selbst angehoben. Diese Anhebung des Ritz - Rades 23 wird von einer, nicht dargestellten, Lichtschranke detektiert und in der Folge wird die gesamte Kerbvorrichtung 29 angehoben.

In der ergänzenden Fig.3a wird dies mittels der Hebevorrichtung 30 bewirkt. Hier sind die Glasplatte 3, das Positions - Rad 18, das Ritz - Rad 23 und die Kerbeinrichtung 29 im Verbund herausgezeichnet. Die gesamte Vorrichtung zum Zuschneiden von Glasplatten 3 kann um 90 Grad gedreht werden. Es können deshalb auch Glasplatten 3 in Querrichtung zugeschnitten werden.

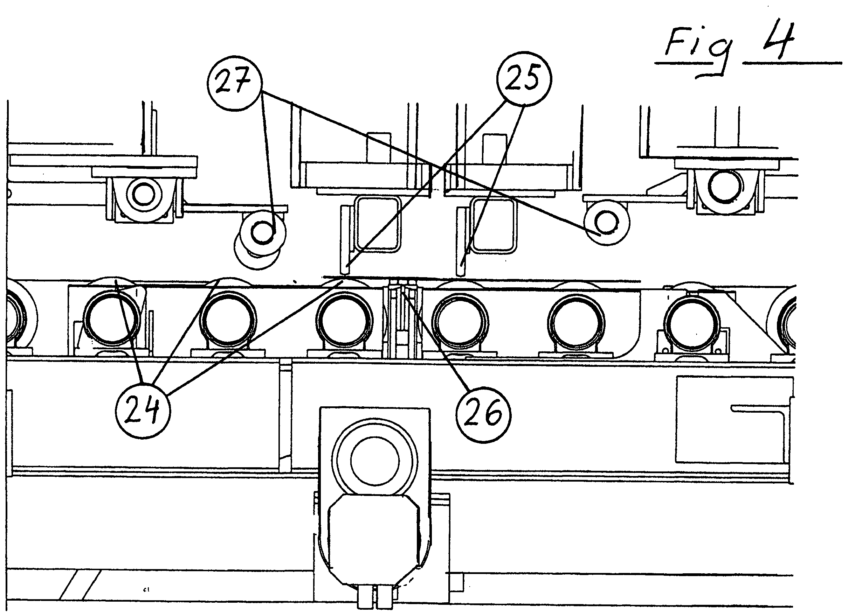

Die Fig. 4 zeigt eine Detail - Darstellung aus dem Bereich des Brechschwerts 26. In dieser Figur sind die Transportrollen 24 als horizontale Gesamtanordnung zu erkennen über denen die Abdrücker der Abdrückeinrichtung 25 für Reststreifen angeordnet sind. Diese Abdrücker sind motorisch verfahrbar und brechen Kopfstreifen und Reststreifen von Glasplatten 3 ab. Die Niederhalter 27 halten kürze Plattenstücke nieder, bei denen die Schwerkraft, bzw. deren Eigengewicht, zum Abbruch nicht ausreicht. Die Niederhalter 27 können auch von unten kommen oder als Baugruppe ausgebildet sein, die mittels Saugern von unten wirkt. Eine weitere Möglichkeit für die Aufgabe, die die Niederhalter 27 erfüllen, ist die Einwirkung von Ultraschall von oben.

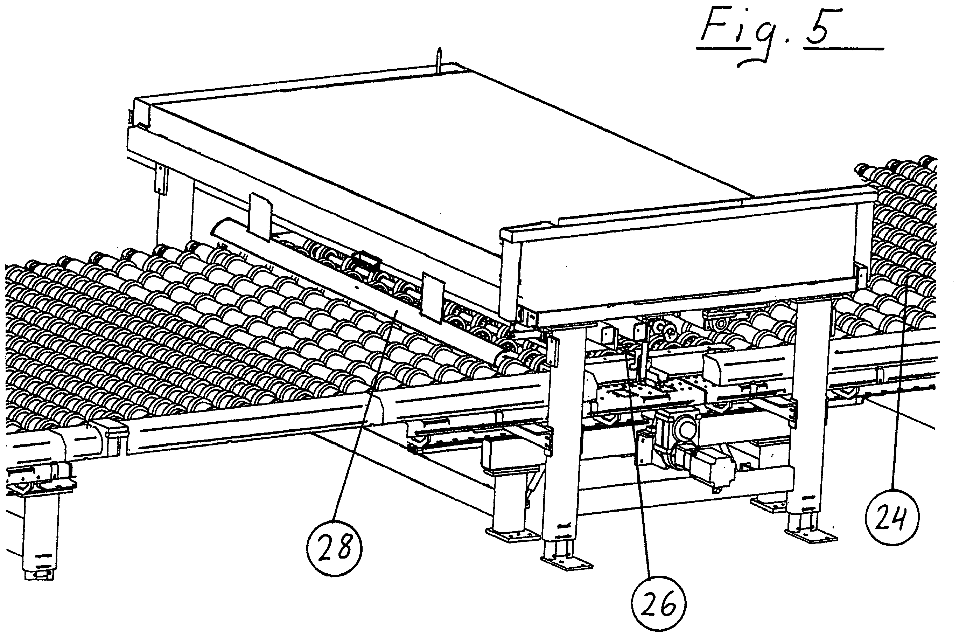

Die Fig. 5 zeigt eine perspektivische Ansicht der Brech - Einrichtung.
Für den Brechvorgang ist die Kenntnis der genauen Lage der Anriss - Linie, die von einem Ende zum anderen Ende einer Glasplatte 3 laufen muss, sehr wichtig. Denn der Brechvorgang kann nur zufriedenstellend verlaufen wenn die Anriss - Linie exakt über der Längsachse des Brechschwerts 26 positioniert ist. Zur exakten Steuerung der Geschwindigkeit einer zu brechenden Glasplatte 3 ist die Kenntnis des Abstands von der Vorderkante bis zur Anriss - Linie deshalb die Voraussetzung für eine exakte Positionierung. Die Lage der Vorderkante einer Glasplatte 3 kann mittels üblicher Sensoren ausreichend genau erfasst werden. Die Lage der vom Laser in Verbindung mit der Wirkung der Kühldüse erzeugten Anriss - Linie ist jedoch nicht leicht erfassbar. Grundsätzlich können Lichtschranken oder Laserschranken zur Erfassung der Vorderkante einer Glasplatte 3 benutzt werden, wobei dann die Strecke bis zu den Schnitten berechnet wird. Hier sind jedoch viele Toleranzen zu berücksichtigen deren Anhäufung schwer abzuschätzen ist. Erfindungsgemäß wird deshalb optional vorgeschlagen den entsprechenden Bereich einer Glasplatte 3 mit einem Flüssigkeits - Kondensat, speziell Wasserdampf, zu beaufschlagen. Hierdurch wird die Anriss - Linie mit einer Kamera, oder über Infrarotsensoren in Verbindung mit einer Kamera und / oder eine zusätzliche Beleuchtung erfassbar und kann steuerungstechnisch ausgewertet werden.
Das Abbrechen einer Glasplatte 3 erfolgt über das Anheben des Brechschwerts 26. Das linienartig ausgebildete Brechschwert 26 wird zu diesem Zweck mittels eines Synchron - Antriebs 7 betätigt. Mit diesem Antrieb ist es, neben der Anhebung auf der ganzen Länge, auch möglich über eine selektive einseitige Anhebung des Brechschwerts 26 die Glasplatte 3 zuerst punktuell unter Spannung zu setzen und somit die Abtrennung durch eine durchgehende Rißbildung gezielt auf einer Seite einzuleiten.
Die selektive einseitige Anhebung ist jedoch nicht zwingend erforderlich.
Ein vergleichbarer Effekt ist auch mit einem ausfahrbaren Stempel im Brechschwert 26 möglich.
Eine weitere Möglichkeit besteht darin im Bereich des Brechschwerts 26 eine Einheit vorzusehen, die die Einstrahlung von Ultraschallwellen in die Rißlinie ermöglicht.

Die komplexe Steuerung der beschriebenen Bewegungsabläufe erfordert ein spezielles Steuerprogramm.

### Bezugszeichenliste

- (1): Portal zur Aufnahme des Laserarbeitskopfes
- (2): Bearbeitungstisch
- (3): Glasplatte
- (4): Grundrahmen der Schneideinheit
- (5): Laserarbeitskopf
- (6): Rollenförderer
- (7): Synchron - Antrieb für ein Brechschwert
- (8): Grundrahmen der Brecheinrichtung
- (9): Laserstrahl - Quelle
- (10): Laserstrahl - Führung
- (11): Umlenkeinrichtung für den Laserstrahl
- (12): Vorratsbehälter für das Kühlmittel
- (13): Aufbereitung des Kühlmittels
- (14): Schutzklappen für die Transportriemen
- (15): Transportriemen
- (16): Antrieb der Transportriemen
- (17): Antrieb der Verschiebeeinrichtung des Laserarbeitskopfes
- (18): Positionier - Rad der Kerbeinrichtung
- (19): Kühldüse
- (20): Laser - Fächer
- (21): Kamera zur Detektion des Laser - Anrisses
- (22): Lichtquelle
- (23): Ritz - Rad der Kerbeinrichtung
- (24): Transportrollen
- (25): Abdrückeinrichtung für Reststreifen
- (26): Brechschwert
- (27): Niederhalter
- (28): Detektiereinrichtung für einen Laser - Anriss
- (29): Kerbeinrichtung
- (30): Hebeeinrichtung für die Kerbeinrichtung 29

## Patentansprüche

1. Vorrichtung zum industriellen Herstellen elastisch verformbarer großflächiger Glasplatten in hoher Stückzahl mit:
a) einer Einrichtung zum Anbringen einer Initialverletzung an der Oberseite einer Glasplatte (3) im Bereich der gewünschten Bruchlinie,
b) einer Einrichtung zur lokal begrenzten Erhitzung der Glasoberfläche mit einem, sich fächerförmig schwenkend auf einer geraden Linie bewegenden, Laserstrahl, wobei dieser in einer rohrartigen Laserstrahlführung (10) und einer anschließenden Umlenkeinrichtung (11) in einen Laserkopf (5) geführt wird,
**dadurch gekennzeichnet, dass**
die gesamte Wegstrecke, die der Laserstrahl geführt wird, aus einem Raum besteht, in dem ein leichter Überdruck herrscht,
c) eine Einrichtung zum Zuführen der Glasplatte (3) vorgesehen ist, wobei die Lage ihrer vorderen Kante erfasst und in der gewünschten Position fixiert wird,
d) eine Einrichtung zur Kühlung der Glasoberfläche vorgesehen ist, wobei auf mindestens einer Seite des Laserstrahls mehrere in Reihe angeordnete, intermittierend betreibbare und in der Intensität steuerbare Kühldüsen (19) in der Form von Lavaldüsen zur Verursachung eines tiefen Risses in der Glasplatte (3) angeordnet sind, die ein, in der Temperatur und der Fördermenge veränderbares, Kühlmittel fördern, und wobei das Kühlmittel mit einem Luftdruck von 5 bis 10 bar aufgebracht wird, und wobei das Kühlmittel ein kationisches Tensid ist oder aus einer Mischung aus Wasser und Äthanol besteht,
e) eine Einrichtung zum Transport der thermisch lokal vorbehandelten Glasplatte in den Bereich einer Einrichtung zum Brechen der Glasplatte vorgesehen ist,
f) eine Einrichtung zur Detektion einer geradlinigen Rissbildung an der Oberfläche der Glasplatte (3) vorgesehen ist, wobei eine Einrichtung zur Beaufschlagung der Glasoberfläche mit einem Flüssigkeits-Kondensat, z.B. Wasserdampf, besteht, wobei die steuerungstechnische Erfassung der Rissbildung mittels einer Beleuchtungseinrichtung in Verbindung mit einem Kamera-System erfolgt,
g) ein geradliniges Brechschwert an der Unterseite der Glasplatte vorgesehen ist, das einseitig und/oder beidseitig anhebbar ist, wobei kürzere Plattenstücke, bei denen die Schwerkraft, bzw. deren Eigengewicht, zum Abbruch nicht ausreicht, durch mindestens einen, motorisch verfahrbaren, Niederhalter (27) niedergehalten werden,
h) dass die Erfassung der Positionen relevanter Werkstücke oder von Teilen solcher Werkstücke mittels optischer Sensoren oder mittels Sensoren auf der Basis der Anwendung von Ultraschall in Verbindung mit einem Kamera-System erfolgen.

2. Vorrichtung nach Anspruch 1,
**dadurch gekennzeichnet,**
**dass** in dem Raum in dem der Laserstrahl geführt wird, Stickstoff oder normale Luft als Atmosphäre verwendet werden.

3. Vorrichtung nach einem der Ansprüche 1 oder 2,
**dadurch gekennzeichnet,**
**dass** im Bereich des Bearbeitungstisches (2) eine Glasplatte (3) mittels mehrerer Transportriemen (15) weiterbewegt wird, wobei zum Schutz der Transportriemen (15) Schutzkappen (14) vorgesehen sind, die sich vor dem Hochfahren des Bearbeitungstisches (2) unter die Glasplatte (3) schieben, wobei die Schutzkappen (14) über regelmäßig angeordnete Abstandsmittel von der Glasplatte (3) über eine Luftschicht getrennt werden.

4. Vorrichtung nach einem der Ansprüche 1 bis 3,
**dadurch gekennzeichnet,**
**dass** die Einrichtung zur Beaufschlagung von Wasserdampf aus einer Einrichtung zur Luftbefeuchtung und anschließenden Abkühlung einer Glasplatte (3) in einem bestimmten Bereich besteht.

5. Vorrichtung nach einem der vorhergehenden Ansprüche, **dadurch gekennzeichnet,**
**dass** die Einrichtungen zur Erhitzung, zur Abkühlung und zum Anbringen einer Initialverletzung um 90 Grad drehbar sind.

6. Vorrichtung nach Anspruch 3,
**dadurch gekennzeichnet,**
**dass** die Maßnahme der Beabstandung der Glasplatte (3) mittels Ultraschall erreicht wird.

7. Verfahren zum industriellen Herstellen von elastisch verformbaren großflächigen Glasplatten in hoher Stückzahl mit den folgenden Merkmalen:
a) es wird ein Positionier - Rad (18) einer Kerbeinrichtung (29) an der gewünschten Stelle des späteren Abtrennvorgangs soweit auf die Oberfläche einer Glasplatte (3) gefahren bis ein Ritz - Rad (23) am Rand der Glasscheibe (3) eine Initialverletzung verursacht, wobei nach diesem Vorgang die Kerbeinrichtung (29) angehoben wird,
b) beginnend an der Stelle der Initialverletzung wird mittels eines am Portal (1) angebrachten Laserkopfes (5) ein Laser-Fächer (20) in gerader Linie über die Oberfläche der Glasplatte (3) geführt, wobei über mehrere in Reihe angeordnete Kühldüsen (19) im Bereich des Laser-Fächers (20) ein Kühlmittel aufgebracht wird und dadurch ein oberflächlicher Anriss in der Glasplatte in die Tiefe getrieben wird,
c) die Glasplatte (3) mittels eines Beförderungsmittels (6) auf einen Bearbeitungstisch (2) mit einem Portal (1) befördert wird, wobei die Lage ihrer vorderen Kante erfasst und in der gewünschten Position fixiert wird, und die Maßnahmen nach den Merkmalen a) und b) durchgeführt werden,
d) anschließend die Glasplatte (3) mittels des Beförderungsmittels (6) in den Bereich einer Einrichtung zur Detektion der Anriss - Linie verbracht wird, wobei diese Detektion mittels einer Lichtschranken und Infrarot-Kameras und/oder einer Einrichtung zur Beaufschlagung der Glasplatte (3) mit einem Flüssigkeits-Kondensat erfolgt und die hierdurch sichtbar gewordene Anriss-Linie steuerungstechnisch mittels einer Beleuchtungsanlage und einem Kamera-System erfasst wird,
e) nach der exakten Erfassung der Position der Anriss-Linie die Glasplatte (3) mittels des Beförderungsmittels (6) über der Abbruch-Kante eines geradlinigen Brechschwerts (26) positioniert wird, wobei sich bei großen Glasplatten (3) der Riss durch die Einwirkung der Schwerkraft öffnet und bei sehr kurzen Teilstücken, bei denen die Schwerkraft, bzw. deren Eigengewicht zum Abbruch nicht ausreicht, diese mittels der Niederhalter (27) niedergehalten werden,
f) das Brechschwert (26) bei diesem Vorgang einseitig oder beidseitig, oder einseitig und dann beidseitig, angehoben wird und dadurch der Bruch der Glasplatte (3) an der vorbestimmten Linie verursacht wird, wobei der Riss von einem Ende der Glasplatte (3) bis zum anderen Ende laufen muss.

8. Verfahren nach Anspruch 7,
**dadurch gekennzeichnet,**
**dass** die Niederhalter (27) auch von unten als eine Einrichtung in Verbindung mit Ansaug-Elementen und/oder als eine Einrichtung in Verbindung mit Ultraschall-Elementen von oben kommen können.

9. Verfahren nach einem der Ansprüche 7 oder 8,
**dadurch gekennzeichnet,**
**dass** im Bereich des Brechschwerts (26) ein Stempel angehoben wird.

10. Verfahren nach einem der Ansprüche 7 bis 9,
**dadurch gekennzeichnet,**
**dass** im Bereich des Brechschwerts (26) Ultraschall - Energie in den Riss eingeleitet wird.

11. Verfahren nach einem der Ansprüche 7 bis 10,
**dadurch gekennzeichnet,**
**dass** die Einrichtungen zur Erhitzung, zur Abkühlung und zum Anbringen einer Initialverletzung um 90 Grad drehbar sind.

12. Verfahren nach einem der Ansprüche 7 bis 11,
**dadurch gekennzeichnet,**
**dass** die Einrichtung zur Kühlung der Glasoberfläche aus einer geradlinigen Anordnung mehrerer Kühldüsen (19) besteht.

13. Verfahren nach einem der Ansprüche 7 bis 12,
**dadurch gekennzeichnet,**
**dass** die Erfassung der Positionen relevanter Werkstücke oder von Teilen solcher Werkstücke mittels optischer Sensoren oder mittels Sensoren auf der Basis der Anwendung von Ultraschall in Verbindung mit einem Kamera-System erfolgen.

## Claims

1. Apparatus for the industrial production of elastically deformable large-area glass plates in high quantities, having:
a) a device for making an initial invasion on the top side of a glass plate (3) in the region of the desired breaking line,
b) a device for the locally limited heating of the glass surface with a laser beam moving pivotally in a fan-shaped manner on a straight line, wherein said laser beam is guided in a tubular laser beam guide (10) and a following deflection device (11) into a laser head (5),
**characterized in that**
the entire path length over which the laser beam is guided consists of a space in which a slight overpressure reigns,
c) a device for feeding the glass plate (3) is provided, wherein the position of its front edge is registered and fixed in the desired position,
d) a device for cooling the glass surface is provided, wherein on at least one side of the laser beam there are disposed a plurality of cooling nozzles (19) in the form of Laval nozzles, for inducing a deep crack in the glass plate (3), which are arranged in a row, can be operated intermittently and controlled in terms of their intensity and which convey a coolant that is variable in temperature and feed rate, and wherein the coolant is applied with an air pressure of 5 to 10 bar, and wherein the coolant is a cationic surfactant or consists of a mixture of water and ethanol,
e) a device for transporting the thermally locally pretreated glass plate into the region of a device for breaking the glass plate is provided,
f) a device for detecting a rectilinear crack formation on the surface of the glass plate (3) is provided, wherein a device for subjecting the glass surface to a liquid condensate, for example water vapor, is present, the registration of the crack formation via control technology being realized by means of a lighting device in conjunction with a camera system,
g) a rectilinear breaking blade is provided on the underside of the glass plate, which can be raised on one side and/or on both sides, wherein shorter plate pieces in which gravitational force, or their own weight, is insufficient for the break-off, are held down by at least one motorized hold-down device (27).
h) **in that** the registration of the positions of relevant workpieces or of parts of such workpieces is realized by means of optical sensors or by means of sensors based on the use of ultrasound in conjunction with a camera system.

2. Apparatus according to Claim 1,
**characterized**
**in that**, in the space in which the laser beam is guided, nitrogen or normal air is used as the atmosphere.

3. Apparatus according to either of Claims 1 and 2,
**characterized**
**in that**, in the region of the machining table (2), a glass plate (3) is moved onward by means of a plurality of conveyor belts (15), wherein protective flaps (14) are provided for the protection of the conveyor belts (15), which protective flaps, prior to the raising of the machining table (2), slide under the glass plate (3), the protective flaps (14) being separated from the glass plate (3), via an air layer, by regularly arranged distancing means.

4. Apparatus according to one of Claims 1 to 3,
**characterized**
**in that** the device for imparting water vapor consists of a device for humidifying the air and then cooling a glass plate (3) in a specific region.

5. Apparatus according to one of the preceding claims,
**characterized**
**in that** the devices for heating, for cooling and for making an initial invasion are rotatable through 90 degrees.

6. Apparatus according to Claim 3,
**characterized**
**in that** the measure of distancing the glass plate (3) is achieved by means of ultrasound.

7. Method for the industrial production of elastically deformable large-area glass plates in high quantities, having the following features:
a) a positioning wheel (18) of a notching device (29) is driven at the desired site of the subsequent separating operation sufficiently far onto the surface of a glass plate (3) that a scoring wheel (23) brings about an initial invasion on the margin of the glass plate (3), wherein, after this operation, the notching device (29) is raised,
b) starting at the site of the initial invasion, a laser fan (20) is guided in a straight line over the surface of the glass plate (3) by means of a laser head (5) attached to the gantry (1), wherein a coolant is applied by a plurality of cooling nozzles (19) arranged in a row in the region of the laser fan (20) and a superficial marking in the glass plate is thereby driven deep,
c) the glass plate (3) is conveyed by means of a conveying means (6) on a machining table (2) having a gantry (1), wherein the position of its front edge is registered and fixed in the desired position, and the measures according to features a) and b) are carried out,
d) the glass plate (3) is then transported by means of the conveying means (6) into the region of a device for detecting the scribed line, wherein this detection is realized by means of a light barrier and infrared cameras and/or a device for subjecting the glass plate (3) to a liquid condensate, and the scribed line which has hereby become visible is registered by the use of control technology by means of a lighting plant and a camera system,
e) following the exact registration of the position of the scribed line, the glass plate (3) is positioned by means of the conveying means (6) over the break-off edge of a rectilinear breaking blade (26), wherein, in the case of large glass plates (3), the crack opens under the influence of gravity and, in the case of very short segments in which gravitational force, or their own weight, is insufficient, these are held down by means of the hold-down devices (27),
f) in this operation, the breaking blade (26) is raised on one side or both sides, or on one side and then on both sides, and the breaking of the glass plate (3) on the desired line is thereby induced, wherein the crack must run from one end of the glass plate (3) to the other end.

8. Method according to Claim 7,
**characterized**
**in that** the hold-down devices (27) can also come from below as a device in conjunction with suction elements and/or from above as a device in conjunction with ultrasound elements.

9. Method according to one of Claims 7 or 8,
**characterized**
**in that**, in the region of the breaking blade (26), a ram is raised.

10. Method according to one of Claims 7 to 9,
**characterized**
**in that**, in the region of the breaking blade (26), ultrasound energy is transmitted into the crack.

11. Method according to one of Claims 7 to 10,
**characterized**
**in that** the devices for heating, for cooling and for making an initial invasion are rotatable through 90 degrees.

12. Method according to one of Claims 7 to 11,
**characterized**
**in that** the device for cooling the glass surface consists of a rectilinear arrangement of a plurality of cooling nozzles (19).

13. Method according to one of Claims 7 to 12,
**characterized**
**in that** the registration of the positions of relevant workpieces or of parts of such workpieces is realized by means of optical sensors or by means of sensors based on the use of ultrasound in conjunction with a camera system.

## Revendications

1. Ensemble de fabrication industrielle à haute cadence de plaques de verre de grande surface élastiquement déformables, l'ensemble présentant :
a) un dispositif qui réalise une entaille initiale sur la face supérieure d'une plaque de verre (3) au niveau de la ligne de rupture souhaitée,
b) un dispositif de chauffage localement limité de la surface du verre à l'aide d'un faisceau laser oscillant en éventail et se déplaçant en ligne droite, ce faisceau laser étant guidé dans un guide tubulaire (10) de faisceau laser suivi d'un dispositif (11) de renvoi qui le renvoie dans une tête laser (5), **caractérisé en ce que**
l'ensemble du parcours du faisceau laser est constitué d'un espace dans lequel règne une légère surpression,
c) un dispositif d'amenée de la plaque de verre (3), la position de son chant étant saisie et fixée en position souhaitée,
d) un dispositif de refroidissement de la surface de verre et sur au moins un côté du faisceau laser, plusieurs tuyères de refroidissement (19) qui présentent la forme de tuyères Laval qui provoquent une rainure profonde dans la plaque de verre (3), aptes à être conduites de façon intermittente et dont l'intensité peut être commandée, transportant un fluide de refroidissement dont la température et le débit peuvent être modifiés, le fluide de refroidissement étant appliqué à une pression d'air de 5 à 10 bars, le fluide de refroidissement étant un tensioactif cationique ou étant constitué d'un mélange d'eau et d'éthanol,
e) un dispositif de transport de la plaque de verre pré-traitée localement thermiquement au niveau d'un dispositif de rupture de la plaque de verre,
f) un dispositif de détection de la formation d'une fissure rectiligne à la surface de la plaque de verre (3), un dispositif appliquant un condensat de liquide sur la surface du verre, par exemple de la vapeur d'eau, la saisie en vue de la commande de la formation de la fissure s'effectuant au moyen d'un dispositif d'éclairage relié à un système de caméra,
g) une lame rectiligne de rupture sur la face inférieure de la plaque de verre, qui peut être relevée d'un côté et/ou des deux côtés, des morceaux de plaque plus courts, que la gravité ou le poids propre ne suffisent pas à rompre, étant retenus vers le bas par au moins un dispositif (27) de retenue apte à être déplacé à l'aide d'un moteur et
h) la saisie des positions des pièces concernées ou de parties de ces pièces s'effectuant au moyen de capteurs optiques ou au moyen de capteurs travaillant sur la base de l'application d'ultrasons en association avec un système de caméra.

2. Ensemble selon la revendication 1, **caractérisé en ce que** dans l'espace dans lequel le faisceau laser est amené, on utilise de l'azote ou de l'air normal comme atmosphère.

3. Ensemble selon l'une des revendications 1 ou 2, **caractérisé en ce qu'**au niveau de la table de traitement (2), une plaque de verre (3) est déplacée au moyen de plusieurs courroies de transport (15), des capots de protection (14) qui se déplacent en dessous de la plaque de verre (3) avant le relèvement de la table de travail (2) étant prévus pour protéger les courroies de transport (15), les capots de protection (14) étant séparés de la plaque de verre (3) par une couche d'air par l'intermédiaire de moyens d'écartement disposés régulièrement.

4. Ensemble selon l'une des revendications 1 à 3, **caractérisé en ce que** le dispositif d'application de vapeur d'eau est constitué d'un dispositif d'humidification de l'air et ensuite de refroidissement d'une partie limitée d'une plaque de verre (3).

5. Ensemble selon l'une des revendications précédentes, **caractérisé en ce que** le dispositif de chauffage, de refroidissement et d'application d'une entaille initiale peuvent tourner sur 90 degrés.

6. Ensemble selon la revendication 3, **caractérisé en ce que** la disposition qui consiste à écarter la plaque de verre (3) est obtenue au moyen d'ultrasons.

7. Procédé de fabrication industrielle à haute cadence de plaques de verre de grande surface élastiquement déformables, présentant les caractéristiques suivantes :
a) une roue de positionnement (18) d'un dispositif d'entaillage (29) est amenée à l'emplacement souhaité pour l'opération ultérieure de séparation de la surface d'une plaque de verre (3) jusqu'à ce qu'une roue d'entaillage (23) provoque sur le bord de la plaque de verre (3) une entaille initiale, le dispositif d'entaillage (29) étant relevé après cette opération,
b) en commençant à l'emplacement de l'entaille initiale, au moyen d'une tête laser (5) placée sur un portique (1), un éventail laser (20) est guidé en ligne droite au-dessus de la surface de la plaque de verre (3), un fluide de refroidissement étant appliqué au niveau de l'éventail laser (20) par plusieurs tuyères de refroidissement (19) disposées en série, pour ainsi transformer la fissure de surface en une fissure s'étendant dans la profondeur de la plaque de verre,
c) la plaque de verre (3) est transportée au moyen d'un moyen de transport (6) sur une table de traitement (2) voisine d'un portique (1), la position de son chant avant est saisie et immobilisée en position souhaitée, les dispositions des caractéristiques a) et b) étant ensuite exécutées,
d) ensuite, la plaque de verre (3) est amenée au moyen du moyen de transport (6) au niveau d'un dispositif de détection de la ligne de fissure, cette détection s'effectuant au moyen d'une barrière lumineuse et de caméras infrarouges et/ou d'un dispositif appliquant un condensat de liquide sur la plaque de verre (3), la ligne de fissuration ainsi rendue visible étant saisie par la commande au moyen d'une installation d'éclairage d'un système de caméra,
e) après détection exacte de la position de la ligne de fissuration, la plaque de verre (3) est placée au moyen du moyen de transport (6) au-dessus du champ de rupture d'un seuil rectiligne de rupture (26), la fissure s'ouvrant par l'action de la gravité dans le cas d'une grande plaque de verre (3) et, pour des morceaux très courts que la gravité ou le poids propre ne suffisent pas à rompre, ces morceaux sont retenus vers le bas au moyen du dispositif (27) de retenue dans le bas et
f) lors de cette opération, la lame de rupture (26) est relevée sur un côté ou sur deux côtés ou sur un côté et ensuite sur les deux côtés et la rupture de la plaque de verre (3) est ainsi provoquée sur la ligne prédéterminée, la fissure devant s'étendre d'une extrémité de la plaque de verre (3) jusqu'à l'autre extrémité.

8. Procédé selon la revendication 7, **caractérisé en ce que** le dispositif de retenue (27) peut également venir du bas comme dispositif associé à des éléments d'aspiration et/ou du haut comme dispositif associé à des éléments à ultrasons.

9. Procédé selon l'une des revendications 7 ou 8, **caractérisé en ce qu'**un poussoir est relevé au niveau de la lame de rupture (26).

10. Procédé selon l'une des revendications 7 à 9, **caractérisé en ce qu'**au niveau de la lame de rupture (26), de l'énergie d'ultrasons est injectée dans la fissure.

11. Procédé selon l'une des revendications 7 à 10, **caractérisé en ce que** les dispositifs de chauffage, de refroidissement et de formation d'une entaille initiale peuvent tourner sur 90 degrés.

12. Procédé selon l'une des revendications 7 à 11, **caractérisé en ce que** le dispositif de refroidissement de la surface du verre est constitué d'un agencement rectiligne de plusieurs tuyères de refroidissement (19).

13. Procédé selon l'une des revendications 7 à 12, **caractérisé en ce que** la saisie de la position des pièces concernées ou de parties de ces pièces s'effectue au moyen de capteurs optiques ou au moyen de capteurs travaillant sur base de l'application d'ultrasons en association avec un système de caméra.
